(19) Europäisches Patentamt / European Patent Office / Office européen des brevets

(11) **EP 4 181 100 A1**

(12) **DEMANDE DE BREVET EUROPEEN**

(43) Date de publication:
**17.05.2023 Bulletin 2023/20**

(21) Numéro de dépôt: **22204301.0**

(22) Date de dépôt: **28.10.2022**

(51) Classification Internationale des Brevets (IPC):
**G08G 1/01** (2006.01)     **G06N 3/00** (2023.01)

(52) Classification Coopérative des Brevets (CPC):
**G06N 3/00; G08G 1/0116; G08G 1/0129; G08G 1/0133**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **10.11.2021 FR 2111941**

(71) Demandeur: **IFP Energies nouvelles
92500 Rueil-Malmaison (FR)**

(72) Inventeurs:
- **DE NUNZIO, Giovanni
  92852 RUEIL-MALMAISON CEDEX (FR)**
- **LARAKI, Mohamed
  92852 RUEIL-MALMAISON CEDEX (FR)**

(74) Mandataire: **IFP Energies nouvelles
Département Propriété Industrielle
Rond Point de l'échangeur de Solaize
BP3
69360 Solaize (FR)**

(54) **PROCÉDÉ DE DÉTERMINATION D'UN DÉBIT MAXIMAL ET/OU D'UN DÉBIT JOURNALIER DE VÉHICULES SUR UN RÉSEAU ROUTIER**

(57) La présente invention concerne un procédé de détermination d'un débit maximal de véhicules sur au moins un brin d'un réseau routier. Pour ce procédé, on réalise des mesures de débit, par au moins un capteur fixe, en au moins un point de mesure d'un réseau routier d'apprentissage. Et on construit, par apprentissage automatique, un modèle de débit maximal de véhicules au moyen de données macroscopiques du réseau routier d'apprentissage et des mesures. Puis, on applique ce modèle au brin de réseau routier considéré.

[Fig 1]

**Description**

**Domaine technique**

La présente invention concerne le domaine de la détermination d'informations relatives au trafic de véhicules pour un réseau routier. En particulier, l'invention concerne un procédé de détermination d'un débit (débit maximal ou débit journalier) de véhicules sur au moins une portion de route d'un réseau routier.

Aujourd'hui, les métropoles et les gestionnaires de route disposent d'outils de modélisation des déplacements pour planifier et simuler l'impact de mesures de régulation et de travaux futurs, afin de réduire la congestion ou d'améliorer la qualité de l'air. Cependant, ces modèles sont très difficiles à mettre en place (besoin de données d'enquête de population très coûteuses, besoin d'un effort conséquent de calibration), difficile à maintenir (la maintenance étant déléguée aux bureaux d'études, il est donc difficile de faire évoluer l'outil rapidement), et difficile à mettre à jour (les enquêtes de population sont menées tous les 5 à 10 ans).

Il existe donc un fort besoin de disposer d'outils de détermination des débits véhiculaires au sein d'un réseau de transport sans devoir utiliser en entrée des données trop coûteuses et difficiles à obtenir comme les enquêtes de mobilité, qui sont d'ailleurs statiques et pas adaptées à prédire les évolutions rapides de la mobilité, ou bien des données d'usage réel, comme par exemple les données « floating car data » (FCD pouvant être traduit par données de trajets réalisés et mesurés), qui sont dynamiques mais pas forcément disponibles sur l'ensemble des brins routier d'un réseau urbain. Par ailleurs, ces outils alternatifs devraient être simple d'utilisation par des non-experts, rapides d'exécution pour évaluer et comparer facilement plusieurs cas d'étude, et enfin fiables en reproduisant au mieux des données récentes de comptage sur le réseau routier considéré.

**Technique antérieure**

La majorité des approches alternatives présentes dans la littérature requièrent une ou plusieurs mesures sur un brin routier donné pour pouvoir estimer le débit trafic correspondant. Leur précision dépend du taux de pénétration des mesures et de leurs disponibilités. Pour ces méthodes, il serait donc impossible d'estimer le débit sur un brin routier qui n'est pas couvert par ces mesures. Quelques documents proposent des extrapolations et des corrélations spatio-temporelles afin d'estimer des débits de véhicule sur un réseau routier même sans couverture complète des mesures. Ils requièrent une mise à jour continue des mesures et sont souvent lourds en temps de calculs et en besoin de mémoire informatique, avec des matrices qui augmentent exponentiellement avec le réseau routier. Leur exploitation sur un large réseau routier peut donc être limitée.

La prévision du débit véhiculaire est un sujet fondamental pour l'opération et la gestion en temps réel des systèmes de transport. L'application peut aller de la surveillance du réseau routier, à la détection d'incidents, ou encore au calcul des émissions et de la qualité de l'air. Un grand nombre d'études dans la littérature proposent l'estimation du débit de trafic à partir de mesures de boucles de comptage. Ils exploitent donc des historiques de séries temporelles afin de prédire le débit trafic sur un certain horizon temporel (extrapolations temporelles). Les modèles proposés pour résoudre cette problématique sont assez larges et varient de modèles statistiques autorégressifs à des modèles de « machine learning » (apprentissage automatique en français) de type réseaux de neurones, machine à vecteurs de support (SVM), ou des forêts aléatoires. Des approches de type « deep learning » (pouvant être traduit par apprentissage profond) ont aussi été explorées dans la littérature. Ces approches amènent souvent à une meilleure prise en compte des corrélations temporelles par rapport aux approches d'apprentissage automatique. Ces méthodes se limitent toutefois aux prévisions temporelles sans étudier forcément l'extrapolation spatiale. Il est donc impossible avec ces méthodes de prédire des débits sur des brins routiers ne disposant pas de mesures.

D'autres méthodes ont proposé d'estimer le débit de trafic à partir d'autres capteurs. Une première méthode développée consiste en une estimation du débit de trafic routier à partir de données provenant de vidéos de surveillance. D'autres solutions concernent des approches statistiques et des approches d'apprentissage supervisé de type CNN (« Convolutional Neural Network » pouvant être traduit par réseau de neurones convolutif), GMM (« Gaussian Mixture Model » pouvant être traduit par modèle de mélange gaussien), ou des filtres de Kalman afin d'estimer le nombre et la direction des véhicules. D'autres méthodes se basent sur l'estimation du débit de trafic routier à partir de mesures de bruit provenant de balises acoustiques. L'approche consiste à extraire des caractéristiques du signal acoustique et de les corréler aux mesures de trafic routier avec des méthodes d'apprentissage supervisé. L'exploitation de la méthode requiert toutefois la présence continue d'un signal acoustique avec un capteur qui soit présent à côté d'un segment routier pour ne pas avoir de bruit de fond. Les données cellulaires ont aussi été exploitées dans la littérature pour l'estimation du débit de trafic. Ces types d'approches sont toutefois limités en précision qui dépend du taux de pénétration des mesures et de leurs disponibilités. Aussi, il serait donc impossible d'estimer le débit de véhicules sur un brin routier qui n'est pas couvert par ces mesures.

D'autres auteurs ont proposé des méthodes d'estimation de débit routier à partir d'un mixte de données et de capteurs présents sur un réseau routier. Certaines méthodes proposées exploitent des données FCD et des données de vidéos de surveillance et ou de mesure de boucles de comptage afin d'estimer le débit sur un réseau routier complet. Les approches peuvent aller d'apprentissage semi-supervisés de type graphe à des complétions de matrices géométriques et des filtres spatiaux temporelles. Ce type d'approche permet donc d'estimer le débit sur des brins routiers même sans mesure. Cela requiert toutefois, une pénétration plus ou moins importante des mesures sur les brins routiers avec une mise à jour continue des mesures. Ces approches sont aussi souvent lourdes en temps de calcul avec des matrices qui croient exponentiellement avec la taille du le réseau routier. Leur exploitation sur un large réseau routier peut donc être limitée.

Par exemple, la demande de brevet WO20211953 décrit un procédé qui se base sur une exploitation d'une ou plusieurs mesures de capteurs sur un brin routier afin d'estimer le débit routier correspondant. Cette méthode peut donc être coûteuse si on souhaite généraliser cette approche sur un large réseau routier. En effet, cette méthode nécessiterait une grande campagne d'instrumentation. De plus, son extrapolation pour une réseau routier ou un brin routier ne disposant pas de capteurs n'est pas possible. En outre, aucune prévision de l'évolution temporelle du débit, ni aucune détermination du débit maximal ne sont permises par cette méthode.

La demande de brevet JP2012198839 décrit une prédiction temporelle du débit routier, en se basant sur un historique de mesure. Cette approche peut donc uniquement être appliquée aux brins de réseau routier disposant d'un capteur, et ne peut donc pas être exploitée sur un large réseau routier. En outre, cette demande de brevet ne permet pas la détermination du débit maximal.

La demande de brevet US2014100766 décrit une extrapolation spatiale du débit routier afin d'estimer le débit sur les brins routiers ne disposant pas de mesure. Toutefois, cette méthode ne prévoit pas l'évolution journalière du débit, ni la détermination du débit maximal d'un brin routier. L'exploitation de cette méthode est aussi limitée par le taux de pénétration de capteurs et par leurs disponibilités : en effet, pour un instant sans mesure, il n'est pas possible de réaliser l'extrapolation.

**Résumé de l'invention**

La présente invention a pour but de déterminer de manière précise et rapide le débit maximal et/ou le débit journalier (donc variable en fonction du jour et de l'heure de la journée) de véhicules sur un brin routier, y compris pour un brin routier non équipé de capteur. Dans ce but, la présente invention concerne un procédé de détermination d'un débit maximal de véhicules sur au moins un brin d'un réseau routier. Pour ce procédé, on réalise des mesures de débit, par au moins un capteur fixe, en au moins un point de mesure d'un réseau routier d'apprentissage. Et on construit, par apprentissage automatique, un modèle de débit maximal de véhicules au moyen de données macroscopiques du réseau routier d'apprentissage et des mesures. Puis, on applique ce modèle au brin de réseau routier considéré. Grâce à l'utilisation seulement de données macroscopiques, un tel modèle permet de prendre en compte l'infrastructure réelle d'un réseau routier, et peut facilement être déployé sur tout réseau routier même sans capteur. En outre, le temps de calcul et la mémoire informatique nécessaire pour mettre en oeuvre le procédé sont limités, grâce à la construction préalable du modèle.

En outre, la présente invention concerne un procédé de détermination d'un débit journalier de véhicules sur au moins un brin d'un réseau routier. Pour ce procédé, on réalise des mesures de débit et/ou de vitesse en au moins un point de mesure d'un réseau routier d'apprentissage. Et on construit, dans un premier temps, par apprentissage automatique, un modèle de débit maximal et un modèle de vitesse de trafic. Puis, dans un deuxième temps, on construit, par apprentissage automatique, un modèle de débit journalier moyen et un modèle de variation journalière du débit, qu'on combine pour former un modèle global de débit. Puis, on peut appliquer ce modèle global au brin de réseau routier considéré. Grâce à l'utilisation seulement de données macroscopiques, un tel modèle permet de prendre en compte l'infrastructure réelle d'un réseau routier, et peut facilement être déployé sur tout réseau routier même sans capteur. En outre, les modèles de débit journalier et de variation journalière de débit dépendent de paramètres temporels (date ou instant de la journée), ce qui permet de prendre en compte les variations du débit en fonction des saisons, des mois, des jours ouvrés ou fériés, des vacances, etc., ainsi que heures de pointe. De plus, les modèles de débit journalier et de variation journalière de débit dépendent de données de population d'une zone englobant le brin routier, ce qui permet d'adapter avec précision la détermination du débit au réseau routier considéré. En outre, le temps de calcul et la mémoire informatique nécessaire pour mettre en oeuvre le procédé sont limités, grâce à la construction préalable de modèles. La construction du modèle global de débit au moyen de modèles « intermédiaires » (débit maximal, vitesse de trafic, débit journalier moyen, variation journalière de débit) permet une meilleure représentativité physique du modèle global de débit.

L'invention concerne un procédé de détermination d'un débit maximal de véhicules sur au moins un brin d'un réseau routier considéré, au moyen d'au moins un capteur fixe de mesure de trafic disposé en au moins un point de mesure agencé sur un réseau routier d'apprentissage. Pour ce procédé, on met en oeuvre les étapes suivantes :

a. On mesure un débit de véhicules audit au moins un point de mesure au moyen dudit au moins un capteur ;

b. On construit une première base d'apprentissage à partir desdites mesures de débit audit au moins un point de mesure et de données macroscopiques dudit réseau routier d'apprentissage ;

c. On construit un modèle de débit maximal de véhicules au moyen d'une première méthode d'apprentissage automatique entraînée sur ladite première base d'apprentissage construite, ledit modèle de débit maximal de véhicules associant à au moins un brin d'un réseau routier un débit maximal de véhicules en fonction de données macroscopiques dudit au moins un brin du réseau routier ; et

d. On détermine un débit maximal de véhicules sur ledit au moins un brin dudit réseau routier considéré en appliquant ledit modèle de débit maximal à des données macroscopiques dudit brin de réseau routier considéré.

Selon un mode de réalisation de l'invention, lesdites données macroscopiques d'un réseau routier sont choisies parmi la topologie du brin du réseau routier, le nombre de voies du brin du réseau routier, la vitesse maximale autorisée du brin du réseau routier, la pente du brin du réseau routier, la signalisation du brin du réseau routier, la longueur du brin du réseau routier, de préférence lesdites données macroscopiques dudit réseau routier étant fournies par un système d'information géographique.

Conformément à une mise en oeuvre, ladite première méthode d'apprentissage automatique est un apprentissage automatique supervisé de régression, de préférence ledit apprentissage automatique est choisi parmi une machine à vecteurs de support, un réseau de neurones, une forêt aléatoire ou une combinaison de ces méthodes.

En outre, l'invention concerne un procédé de détermination d'un débit journalier de véhicules sur au moins un brin d'un réseau routier considéré, au moyen d'au moins un capteur fixe de mesure de trafic disposé en au moins un point de mesure d'un réseau routier d'apprentissage. Pour ce procédé, on met en oeuvre les étapes suivantes :

a. On mesure un débit et éventuellement une vitesse de véhicules audit au moins un point de mesure au moyen dudit au moins un capteur ;

b. On construit une première base d'apprentissage à partir desdites mesures de débit et éventuellement de vitesse audit au moins un point de mesure et de données macroscopiques dudit réseau routier d'apprentissage ;

c. On construit un modèle de débit maximal de véhicules au moyen d'une première méthode d'apprentissage automatique entraînée sur ladite première base d'apprentissage construite, ledit modèle de débit maximal de véhicules associant à au moins un brin d'un réseau routier un débit maximal de véhicules en fonction de données macroscopiques dudit au moins un brin du réseau routier ;

d. On construit un modèle de vitesse du trafic de véhicules au moyen d'une deuxième méthode d'apprentissage automatique entraînée sur ladite première base d'apprentissage construite, ledit modèle de vitesse du trafic de véhicules associant à au moins un brin d'un réseau routier une vitesse du trafic de véhicule en fonction de données macroscopiques dudit au moins un brin du réseau routier ;

e. On construit une deuxième base d'apprentissage à partir desdites mesures de débit et éventuellement de vitesse audit au moins un point de mesure, desdites données macroscopiques dudit réseau routier d'apprentissage, de données d'urbanisme dudit réseau routier d'apprentissage, de paramètres temporels, du débit maximal de véhicules sur ledit réseau routier d'apprentissage déterminé par ledit modèle de débit maximal, et de la vitesse du trafic de véhicules sur ledit réseau routier d'apprentissage déterminée par ledit modèle de vitesse du trafic de véhicules ;

f. On construit un modèle de débit journalier moyen de véhicules au moyen d'une troisième méthode d'apprentissage automatique entraînée sur ladite deuxième base d'apprentissage construite, ledit modèle de débit journalier moyen de véhicules associant à au moins un brin d'un réseau routier un débit moyen journalier en fonction de données macroscopiques dudit réseau routier, de données d'urbanisme dudit réseau routier, et d'une date ;

g. On construit un modèle de variation journalière du débit de véhicules au moyen d'une quatrième méthode d'apprentissage automatique entraînée sur ladite deuxième base d'apprentissage construite, ledit modèle de variation journalière du débit associant à au moins un brin d'un réseau routier une variation journalière du débit de véhicules en fonction de données macroscopiques dudit réseau routier, de données d'urbanisme dudit réseau routier, et d'un instant dans une journée ;

h. On construit un modèle global de débit de véhicules au moyen dudit modèle de débit journalier moyen et dudit modèle de variation journalière ; et

i. On détermine le débit journalier de véhicules sur ledit au moins un brin dudit réseau routier considéré en appliquant ledit modèle global de débit à des données macroscopiques dudit brin de réseau routier considéré, à des données d'urbanisme dudit réseau routier considéré et à des paramètres temporels.

Selon un aspect, ledit modèle global de débit de véhicules comporte en outre une correction du débit journalier pour assurer la connectivité des brins dudit réseau routier, ladite correction étant mise en oeuvre par une optimisation sous contrainte du débit journalier.

Avantageusement, ladite troisième et/ou ladite quatrième méthode d'apprentissage automatique est un apprentissage automatique supervisé de régression, de préférence ledit apprentissage automatique est choisi parmi une machine à vecteurs de support, un réseau de neurones, une forêt aléatoire ou une combinaison de ces méthodes.

Selon une option de réalisation, on construit ledit modèle de variation journalière de débit de véhicules au moyen d'une étape de collecte des profils de débit, une étape regroupement des profils de débit par une méthode d'apprentissage non supervisée, et d'une étape de classification par une méthode d'apprentissage supervisée.

Conformément à un mode de réalisation, on construit le modèle global de véhicules au moyen de l'équation suivante : $Deb_d(i,j) = Deb_m(i,j) + \sigma_m(i,j)P_d(i,j)$ avec i le brin routier, j le temps, $Deb_d$ le débit global de débit de véhicules, $Deb_m$ le débit journalier moyen de véhicules déterminé par le modèle de débit journalier, $\sigma_m$ l'écart type du débit journalier moyen de véhicules déterminé par le modèle de débit journalier, et $P_d$ la variation journalière du débit déterminée par le modèle de variation journalière du débit.

De manière avantageuse, lesdites données d'urbanisme sont choisies parmi la densité de population d'une zone englobant le brin routier, et la typologie d'activités d'une zone englobant le brin routier.

Selon une mise en oeuvre, lesdits paramètres temporels sont choisis parmi le mois, la semaine, le jour de la semaine, les jours ouvrés ou les jours fermés.

Selon un aspect, on affiche le débit maximal de véhicules et/ou le débit journalier de véhicules sur ledit au moins un brin du réseau routier sur une carte routière, de préférence au moyen d'un système informatique ou d'un téléphone intelligent.

D'autres caractéristiques et avantages du procédé selon l'invention, apparaîtront à la lecture de la description ci-après d'exemples non limitatifs de réalisations, en se référant aux figures annexées et décrites ci-après.

**Liste des figures**

La figure 1 illustre un procédé de détermination du débit maximal selon un mode de réalisation de l'invention.

La figure 2 illustre un procédé de détermination du débit journalier selon une première mise en oeuvre de l'invention.

La figure 3 illustre un procédé de détermination du débit journalier selon une deuxième mise en oeuvre de l'invention.

La figure 4 représente l'évolution du débit en fonction de l'heure de la journée pour un brin routier, une courbe étant obtenue par la mesure, l'autre courbe étant obtenue par un mode de réalisation du procédé selon l'invention.

La figure 5 représente différents profils de débits journaliers, dans un graphique du débit en fonction de l'heure de la journée.

La figure 6 illustre un exemple d'une portion d'une carte routière obtenue par le mode de réalisation de la figure 2.

La figure 7 illustre un exemple d'une portion d'une carte routière obtenue par le mode de réalisation de la figure 3.

**Description des modes de réalisation**

La présente invention concerne la détermination d'un débit maximal et/ou d'un débit journalier de véhicules sur au moins une portion de route d'un réseau routier, de préférence sur l'ensemble d'un réseau routier. Dans la présente demande, l'adjectif journalier traduit la variation du débit d'un jour à l'autre, notamment en raison du jour de la semaine, du mois, des jours fériés, des périodes de vacances scolaires, etc., ainsi que la variation au sein de la journée, notamment en raison des heures de travail, des heures de classes, des heures des loisirs, etc. Ainsi, la présente invention vise à dénombrer le nombre (maximal et/ou journalier) de véhicules par unité de temps qui passent par une portion de route. On appelle réseau routier un ensemble de routes et de chemins dans une zone géographique prédéfinie. Cette zone géographique prédéfinie peut être un quartier d'une ville, une ville, une communauté de communes, un département, etc. Un brin du réseau routier est une subdivision élémentaire du réseau routier entre deux noeuds consécutifs du réseau routier. Par exemple un brin du réseau routier peut être une route entre deux intersections consécutives, entre deux signalisations consécutives, entre une intersection et une signalisation, ou une partie d'autoroute entre deux sorties consécutives, etc. Ainsi, on dispose d'un découpage fin du réseau routier, et d'un modèle qui est adapté au réseau routier sans données microscopiques.

Le réseau routier peut être représenté par un graphe, appelé graphe routier. Le graphe routier est composé d'un ensemble d'arêtes (appelés aussi arcs) et de noeuds, les noeuds pouvant représenter les intersections, et les arêtes les portions de routes entre les intersections. Le graphe routier peut être obtenu à partir d'un service en ligne (« webservice ») de cartographie, par exemple Here ™ (Here Apps LLC, Pays-Bas) qui fournit les arêtes du graphe sous forme d'objets géométriques purs. De préférence, le graphe routier est cohérent avec le réseau routier (toutes les connexions physiques entre deux routes, et uniquement celles-ci, sont représentées par les noeuds du graphe), aussi invariant que possible dans le temps. De plus, le graphe routier peut être simplifié, en ne prenant pas en compte les portions de routes telles que les impasses, les chemins dans les parcs ou les pistes cyclables, en fonction du type du véhicule considéré (par exemple pour le mode de réalisation des véhicules automobiles, les pistes cyclables peuvent ne pas être prises en compte).

Le procédé selon l'invention peut être mis en oeuvre pour tout type de véhicules : bicyclette, véhicule automobile, deux-roues motorisé, bateau, aéroglisseur, trottinette, etc. ainsi que les déplacements piétons. Toutefois, le procédé selon l'invention est particulièrement adapté aux véhicules motorisés, tels que les véhicules automobiles, poids lourds, bus, deux-roues motorisés, etc.

Le procédé selon l'invention met en oeuvre des mesures obtenues depuis au moins un capteur fixe. Chaque capteur fixe est disposé sur un point (appelé point de mesure) d'un réseau routier (appelé réseau routier d'apprentissage). Chaque capteur fixe permet des mesures ponctuelles (spatialement) et temporelles du nombre de passages de véhicules (débit de véhicules) et éventuellement de la vitesse de passage des véhicules (vitesse de trafic). Les positions des points de mesure sont identifiées au sein du réseau routier. Selon un mode de réalisation de l'invention, les capteurs fixes peuvent être des caméras, des radars, des boucles inductives, des cellules photoélectriques sensibles détectant la rupture d'un rayon lumineux, des câbles piézo-électriques mesurant la pression exercée sur la chaussée ou tous capteurs analogues.

Le premier mode de réalisation est un procédé de détermination du débit maximal de véhicules sur au moins un brin du réseau routier considéré. Le débit maximal correspond au nombre maximal de véhicules se déplaçant sur un brin routier par unité de temps. Il s'agit d'un paramètre physique qui dimensionne le brin routier. Le débit maximal de véhicules traduit la capacité d'un brin routier.

Le procédé de détermination du débit maximal de véhicules met en oeuvre les étapes suivantes :

    1. Mesure avec les capteurs fixes

    2. Construction d'une première base d'apprentissage

    3. Construction du modèle de débit maximal

A. Détermination du débit maximal

Les étapes 2, 3 et A peuvent être mises en oeuvre par des moyens informatiques, par exemple un ordinateur. Les étapes 1 à 3 peuvent être réalisées hors ligne, et l'étape A peut être réalisée en ligne. L'utilisation en ligne du modèle construit hors ligne permet une simplicité d'utilisation, un temps de calcul en ligne réduit, et un besoin en mémoire informatique limité, par rapport à un modèle microscopique, tout en ayant une bonne précision. Ces étapes sont détaillées dans la suite de la description.

Ce mode de réalisation de l'invention peut être vu comme l'utilisation d'un capteur (mesure de débit), et de moyens de traitement de signal (modèle de débit maximal), pour déterminer une grandeur physique : le débit maximal de véhicules.

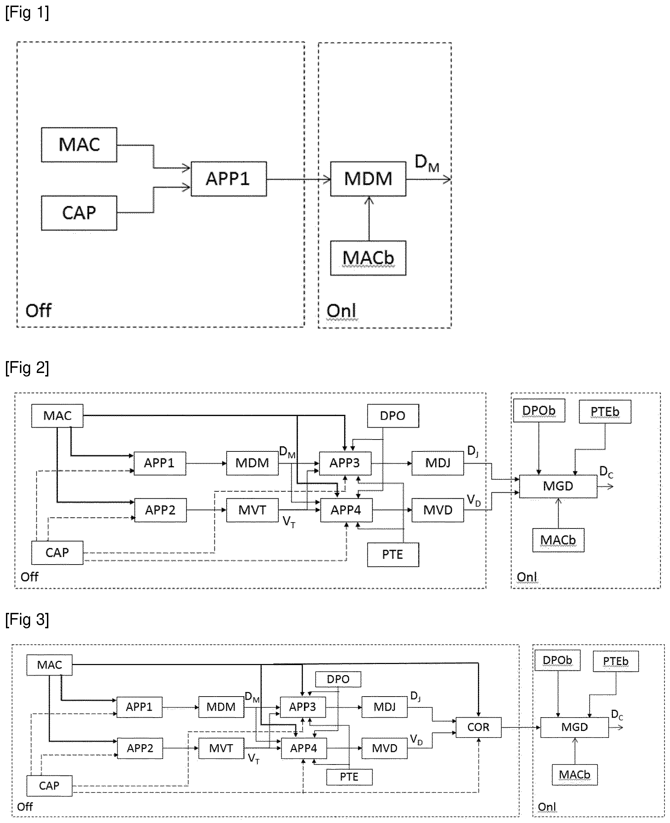

La figure 1 illustre, schématiquement et de manière non limitative, les étapes du procédé de prédiction de détermination du débit maximal de véhicules selon un mode de réalisation de l'invention. Au moyen de données macroscopiques (MAC) d'un réseau routier d'apprentissage, et de mesures d'au moins un capteur (CAP) du réseau routier d'apprentissage constituant une base d'apprentissage, on entraine une méthode d'apprentissage (APP1) et on détermine le modèle de débit maximal (MDM). Ces premières étapes sont réalisées hors ligne (Off). Ensuite, en ligne (Onl), le modèle de débit maximal (MDM) permet la détermination de débit maximal ($D_M$) pour le brin de réseau routier considéré, dont on connaît les données macroscopiques (MACb).

Le deuxième mode de réalisation est un procédé de détermination du débit journalier de véhicules sur au moins un brin du réseau routier considéré. Le débit journalier correspond au nombre de véhicules se déplaçant sur un brin routier par unité de temps, ce nombre étant variable en fonction de la date et de l'instant de la journée considérée.

Le procédé de détermination du débit journalier de véhicules met en oeuvre le procédé de détermination du débit maximal de véhicules, a minima pour le réseau routier d'apprentissage. Cette étape du procédé permet de déterminer les limites en termes de débit pour un réseau routier considéré. Par conséquent, la détermination du débit journalier est plus précise, dans le sens où elle représente bien les caractéristiques du réseau routier.

Le procédé de détermination du débit journalier de véhicules met en oeuvre les étapes suivantes :

    1. Mesure avec les capteurs fixes

2. Construction d'une première base d'apprentissage

3. Construction du modèle de débit maximal

4. Construction du modèle de vitesse de trafic

5. Construction d'une deuxième base d'apprentissage

6. Construction du modèle de débit journalier moyen

7. Construction du modèle de variation journalière

8. Construction du modèle global de débit

9. Détermination du débit journalier de véhicules

Ces étapes 2 à 9 peuvent être mises en oeuvre par des moyens informatiques, notamment un ordinateur. Les étapes 1 à 8 peuvent être réalisées hors ligne, et l'étape 9 peut être réalisée en ligne. L'utilisation en ligne du modèle global construit hors ligne permet une simplicité d'utilisation, un temps de calcul en ligne réduit, ainsi qu'un besoin en mémoire informatique limité, par rapport à un modèle microscopique, tout en ayant une bonne précision. Ces étapes sont détaillées dans la suite de la description.

De plus, les étapes 3 et 4 peuvent être réalisées dans cet ordre, dans l'ordre inverse, ou simultanément. De préférence, les étapes 3 et 4 peuvent être réalisées simultanément.

En outre, les étapes 6 et 7 peuvent être réalisées dans cet ordre, dans l'ordre inverse, ou simultanément. De préférence, les étapes 6 et 7 peuvent être réalisées simultanément.

Ce mode de réalisation de l'invention peut être vu comme l'utilisation d'un capteur (mesure de débit), et de moyens de traitement de signal (modèle de débit journalier), pour déterminer une grandeur physique : le débit journalier de véhicules.

La figure 2 illustre, schématiquement et de manière non limitative, les étapes du procédé de prédiction de détermination du débit maximal de véhicules selon un mode de réalisation de l'invention. Afin d'améliorer la lisibilité de la figure, les flèches liées aux données macroscopiques sont plus épaisses, et les flèches liées aux mesures du capteur sont en traits pointillés. Au moyen de données macroscopiques (MAC) d'un réseau routier d'apprentissage, et de mesures d'au moins un capteur (CAP) du réseau routier d'apprentissage constituant une première base d'apprentissage, on entraine une méthode d'apprentissage (APP1) et on détermine le modèle de débit maximal (MDM). De plus, au moyen de données macroscopiques (MAC) d'un réseau routier d'apprentissage, et de mesures d'au moins un capteur (CAP) du réseau routier d'apprentissage constituant la première base d'apprentissage, on entraine une méthode d'apprentissage (APP2) et on détermine le modèle de trafic de véhicules (MVT).

Au moyen de données macroscopiques (MAC) d'un réseau routier d'apprentissage, de mesures d'au moins un capteur (CAP) du réseau routier d'apprentissage, de données d'urbanisme (DPO), de paramètres temporels (PTE), du débit maximal $D_M$ obtenu par le modèle de débit maximal (MDM), de la vitesse de trafic (VT) obtenue par le modèle de vitesse de trafic (MVT), on construit une deuxième base d'apprentissage. Puis, à partir de cette deuxième base d'apprentissage, on entraine une méthode d'apprentissage (APP3) et on détermine le modèle de débit journalier moyen (MDJ). De plus, à partir de cette deuxième base d'apprentissage, on entraîne une méthode d'apprentissage (APP4) et on détermine le modèle de variation de débit (MVD). On combine ces deux derniers modèles pour former un modèle global de débit journalier (MGD). Ces premières étapes sont réalisées hors ligne (Off).

Ensuite, en ligne (Onl), le modèle global de débit journalier (MGD) permet la détermination de débit journalier ($D_C$) pour le brin de réseau routier considéré, dont on connaît les données macroscopiques (MACb), les données d'urbanisme (DPOb) et les paramètres temporels (PTEb).

Conformément à une mise en oeuvre de l'invention, le procédé peut comporter une étape supplémentaire de correction du débit journalier. Cette étape de correction est prévue pour assurer la connectivité des brins du réseau routier. La correction peut être mise en oeuvre lors de la construction du modèle global de débit et/ou lors de la détermination du débit journalier de véhicules. Cette correction peut être mise en oeuvre par une optimisation sous contrainte du débit journalier, de manière à assurer qu'en un noeud du réseau routier, le flux entrant est inférieur ou égal au flux sortant.

Pour cette mise en oeuvre, le procédé détermination du débit journalier de véhicules met en oeuvre les étapes suivantes :

1. Mesure avec les capteurs fixes

2. Construction d'une première base d'apprentissage

3. Construction du modèle de débit maximal

4. Construction du modèle de vitesse de trafic

5. Construction d'une deuxième base d'apprentissage

6. Construction du modèle de débit journalier moyen

7. Construction du modèle de variation journalière

8. Construction du modèle global de débit

8'. Correction du débit journalier

9. Détermination du débit journalier de véhicules

Ces étapes 2 à 9 peuvent être mises en oeuvre par des moyens informatiques, notamment un ordinateur. Les étapes 1 à 8' peuvent être réalisées hors ligne, et l'étape 9 peut être réalisée en ligne. L'utilisation en ligne du modèle global construit hors ligne permet un temps de calcul en ligne réduit, ainsi qu'un besoin en mémoire informatique limité, par rapport à un modèle microscopique, tout en ayant une bonne précision. Ces étapes sont détaillées dans la suite de la description.

De plus, les étapes 3 et 4 peuvent être réalisées dans cet ordre, dans l'ordre inverse, ou simultanément. De préférence, les étapes 3 et 4 peuvent être réalisées simultanément.

En outre, les étapes 6 et 7 peuvent être réalisées dans cet ordre, dans l'ordre inverse, ou simultanément. De préférence, les étapes 6 et 7 peuvent être réalisées simultanément.

La figure 3 illustre, schématiquement et de manière non limitative, les étapes du procédé de prédiction de détermination du débit journalier de véhicules selon cette mise en oeuvre de l'invention. Les étapes identiques à la mise en oeuvre de la figure 2 ne sont pas décrites à nouveau. Le procédé comprend une étape supplémentaire de correction COR du débit journalier qui participe à la construction du modèle global du débit journalier.

Dans la suite de la demande, le réseau routier auquel on applique l'étape A et/ou l'étape 9 est appelé « réseau routier considéré ». Il pourrait être également appelé « premier réseau routier », il s'agit du réseau routier pour lequel on souhaite déterminer le débit maximal et/ou le débit journalier. Ces notations permettent de le distinguer du « réseau routier d'apprentissage », qui sert pour la construction de la première base d'apprentissage et éventuellement la deuxième base d'apprentissage. Le « réseau routier considéré » peut correspondre ou peut inclure le « réseau routier d'apprentissage », ou être un réseau routier différent du « réseau routier d'apprentissage ».

### 1. Mesures avec des capteurs fixes

Lors de cette étape, on mesure un débit de véhicules aux points de mesure du réseau routier d'apprentissage au moyen des capteurs fixes. Ce débit de véhicules aux points de mesures est ponctuel (en terme spatial et non en terme temporel) : il concerne uniquement les points de mesures.

De préférence, on peut réaliser également lors de cette étape l'horodatage des mesures par capteurs fixes, afin de connaître l'instant de passage du véhicule sur les points de mesure. Cette mesure peut permettre de déterminer le nombre de passages de véhicules pour une période donnée, ou peut être mise en oeuvre dans une détermination prédictive de nombre de passages de véhicules pour une période future.

Selon un mode de réalisation, on peut également mesurer au moyen des capteurs fixes la vitesse de véhicules aux points de mesure lors de cette étape.

Conformément à une mise en oeuvre de l'invention, lors de cette étape, on peut compléter les mesures avec des valeurs simulées de trafic, en des brins du réseau routier d'apprentissage. Le simulateur dit « SUMO » (pour « Simulation of Urban Mobility » pouvant être traduit par simulation de mobilité urbain) est un exemple de simulateur de trafic open-source (c'est-à-dire en libre-accès). D'autres simulateurs de trafic peuvent être utilisés. Ces données simulées peuvent permettre de compléter les données mesurées, si celles-ci ne sont pas suffisantes, et ainsi améliorer la construction des modèles de débit maximal et éventuellement de vitesse de trafic.

De manière avantageuse, on peut mettre en oeuvre la mesure de débit et éventuellement de vitesse pendant au moins un mois, de préférence pendant au moins une année, de manière à prendre en compte toutes les évolutions temporelles (vacances scolaires, jours fériés, saisons, mois, etc.).

## 2. Construction de la première base d'apprentissage

Lors de cette étape, on construit une première base d'apprentissage pour un réseau routier d'apprentissage. Le réseau routier d'apprentissage est un réseau routier pour lequel on connaît certaines caractéristiques qui servent dans les étapes 3 et 4 pour la construction du modèle de débit maximal, et le cas échéant du modèle de vitesse du trafic. Le réseau routier d'apprentissage peut être différent ou identique du réseau routier considéré pour l'étape A, et le cas échéant pour l'étape 9. En effet, l'invention permet de déterminer les quantités des débits pour un autre réseau routier que celui qu'on utilise pour construire le modèle.

On construit la première base d'apprentissage à partir d'au moins de données macroscopiques d'un réseau routier d'apprentissage et à partir de données mesurées et éventuellement simulées du trafic sur ledit réseau routier d'apprentissage. Les données macroscopiques du réseau routier correspondent aux informations liées au réseau routier, telle que l'infrastructure, la pente, la signalisation, etc. Les données de trafic sont les données mesurées ou simulées représentant le trafic sur le réseau routier.

Selon un aspect de l'invention, les données macroscopiques du réseau routier peuvent être la topologie (c'est-à-dire la pente, les virages, les intersections, la signalisation, etc.), le type de brin routier (par exemple route urbaine, autoroute, etc.), le nombre de voies du brin routier, la vitesse maximale du brin routier, la signalisation du brin routier, la pente du brin routier, la longueur du brin routier, etc. Préférentiellement, les données macroscopiques comprennent au moins le type de brin routier, le nombre de voies du brin routier, la vitesse maximale du brin routier et la longueur du brin routier. De préférence, les données macroscopiques du réseau routier peuvent être fournies par un système d'information géographique (SIG). Here ™, Google Maps ™, OpenStreetMap ™ sont des exemples de système d'information géographique. Les données macroscopiques sont toujours disponibles et depuis n'importe quel lieu. Ainsi, elles peuvent servir comme entrées uniques de la première base d'apprentissage et du modèle de débit maximal, et le cas échéant du modèle de vitesse du trafic.

## 3. Construction du modèle de débit maximal

Lors de cette étape, on construit un modèle de débit maximal de véhicules qui associe à un brin routier un débit maximal de véhicules en fonction de données macroscopiques du brin routier. En d'autres termes, le modèle microscopique permet de déterminer le débit maximal de véhicules sur un brin d'un réseau routier ; le modèle de débit maximal est dépendant des données macroscopiques du brin routier.

Lors de cette étape, on construit le modèle de débit maximal de véhicules par une première méthode d'apprentissage automatique (de l'anglais « machine learning ») entraînée au moyen de la première base d'apprentissage construite telle que décrite ci-dessus, comprenant au moins des données macroscopiques du réseau routier d'apprentissage et des mesures de débit.

Lors de cette étape, on peut construire le modèle de débit maximal par apprentissage automatique, de préférence par apprentissage automatique supervisé, de manière préférée par apprentissage automatique supervisé de régression. Etant donné que l'invention proposée considère le débit mesuré en certains points et les données macroscopiques du réseau routier pour l'apprentissage automatique, le modèle du débit maximal de véhicules est précis et représentatif.

Selon un exemple de réalisation, le modèle du débit maximal de véhicules $D_M$ peut s'écrire :
$D_M = f(Top, pente, Vmax)$ avec Top la topologie du brin routier, pente la pente du brin routier, $V_{max}$ la vitesse maximale autorisée sur le brin routier. Top, pente et $V_{max}$ sont des exemples de données macroscopiques. De manière générale, la fonction f peut dépendre d'autres données macroscopiques du réseau routier telles que celles listées précédemment (par exemple, le type de brin routier, le nombre de voies du brin routier, la vitesse maximale et la longueur du brin routier).

La fonction f peut être déterminé à partir d'un algorithme d'apprentissage supervisé de régression, tel qu'une machine à vecteur de support (SVM de l'anglais « support vector machine »), un réseau de neurones, une forêt aléatoire ou une combinaison de ces méthodes. A titre d'exemple non limitatif, le procédé peut mettre en oeuvre un réseau de neurones avec deux couches cachées de vingt et quinze neurones respectivement, ou peut mettre en oeuvre une forêt aléatoire avec vingt estimateurs (ou arbres) de profondeur égale à 15, ou tout algorithme équivalent.

Selon un aspect, cette étape peut inclure une méthode de validation, de préférence une méthode de validation croisée, notamment une méthode de validation croisée à k-blocs (« k-fold »). Cette méthode de validation croisée permet de réduire les problèmes de « surapprentissage » et d'améliorer la précision du modèle.

## A. Détermination du débit maximal

Lors de cette étape (mise en oeuvre pour le premier mode de réalisation), on détermine le débit maximal de véhicules sur ledit au moins un brin du réseau routier considéré, en appliquant le modèle de débit maximal de véhicules déterminé à l'étape 3 à des données macroscopiques du brin de réseau routier considéré. Le réseau routier considéré peut être identique ou différent du réseau routier d'apprentissage. En d'autres termes, pour le brin du réseau routier considéré, on connaît les données macroscopiques, et on applique le modèle construit à l'étape précédente à ces données relatives au brin du réseau routier considéré, ce qui permet de déterminer un débit maximal de véhicules pour ce brin du réseau routier.

## 4. Construction du modèle de vitesse du trafic

Lors de cette étape (mise en oeuvre pour le deuxième mode de réalisation ainsi que les étapes suivantes), on construit un modèle de vitesse du trafic de véhicules qui associe à un brin routier une vitesse moyenne de trafic en fonction de données macroscopiques du brin routier. En d'autres termes, le modèle de vitesse du trafic permet de déterminer la vitesse moyenne de trafic de véhicules sur un brin d'un réseau routier ; le modèle de vitesse de trafic est dépendant des données macroscopiques du brin routier. Ce modèle prend en entrée les vitesses nominales (de l'anglais « free-flow ») et vitesses limites sur chaque brin routier, et les lient aux vitesses moyennes des points de mesure. Il permet donc d'estimer une certaine vitesse moyenne nominale, proche de la mesure, sur un brin routier donné. La vitesse moyenne estimée en sortie de ce modèle est utilisée pour estimer le débit routier journalier moyen sur chaque brin d'un réseau routier donné. Cela est dû au fait qu'il y a une forte corrélation entre la vitesse moyenne et le niveau de débit moyen.

Lors de cette étape, on construit le modèle de vitesse moyenne de trafic de véhicules par une deuxième méthode d'apprentissage automatique (de l'anglais « machine learning ») entraînée au moyen de la première base d'apprentissage construite telle que décrite ci-dessus, comprenant au moins des données macroscopiques du réseau routier d'apprentissage et des mesures de débit et éventuellement de vitesse.

Lors de cette étape, on peut construire un modèle de vitesse de trafic par apprentissage automatique, de préférence par apprentissage automatique supervisé, de manière préférée par apprentissage automatique supervisé de régression. Etant donné que l'invention proposée considère le débit mesuré en certains points et les données macroscopiques du réseau routier d'apprentissage, le modèle de vitesse de trafic de véhicules est précis et représentatif.

Selon un exemple de réalisation, le modèle de vitesse moyenne de trafic de véhicules $V_T$ peut s'écrire :
$V_T = g(Top, pente, Vmax)$ avec Top la topologie du brin routier, pente la pente du brin routier, $V_{max}$ la vitesse maximale autorisée sur le brin routier. Top, pente et $V_{max}$ sont des exemples de données macroscopiques. De manière générale, la fonction g peut dépendre d'autres données macroscopiques du réseau routier, notamment celles décrites précédemment (par exemple le type de brin routier, le nombre de voies du brin routier, la vitesse maximale du brin routier et la longueur du brin routier).

La fonction g peut être déterminée à partir d'un algorithme d'apprentissage supervisé de régression, tel qu'une machine à vecteur de support (SVM de l'anglais « support vector machine »), un réseau de neurones, une forêt aléatoire ou une combinaison de ces méthodes. A titre d'exemple non limitatif, le procédé peut mettre en oeuvre un réseau de neurones avec deux couches cachées de vingt et quinze neurones respectivement, ou peut mettre en oeuvre une forêt aléatoire avec vingt estimateurs (ou arbres) de profondeur égale à 15, ou tout algorithme équivalent.

Selon un aspect, cette étape peut inclure une méthode de validation, de préférence une méthode de validation croisée, notamment une méthode de validation croisée à k-blocs (« k-fold »). Cette méthode de validation croisée permet de réduire les problèmes de « surapprentissage » et d'améliorer la précision du modèle.

## 5. Construction de la deuxième base d'apprentissage

Lors de cette étape, on construit une deuxième base d'apprentissage pour un réseau routier d'apprentissage. Le réseau routier d'apprentissage est un réseau routier pour lequel on connaît certaines caractéristiques qui servent dans les étapes 6 et 7 pour la construction du modèle de débit journalier, et le modèle de variation du débit. Le réseau routier d'apprentissage peut être différent ou identique au réseau routier considéré pour l'étape 9. En effet, l'invention permet de déterminer les quantités des débits pour un autre réseau routier que celui qu'on utilise pour construire le modèle. De préférence, le réseau routier d'apprentissage de la première base d'apprentissage peut être identique au réseau routier d'apprentissage de la deuxième base d'apprentissage.

On construit la deuxième base d'apprentissage à partir :

- d'au moins des données macroscopiques d'un réseau routier d'apprentissage,
- de données mesurées et éventuellement simulées du trafic sur ledit réseau routier d'apprentissage,
- de données d'urbanisme dudit réseau routier d'apprentissage,
- de paramètres temporels,
- du débit maximal de véhicules obtenu par le modèle de débit maximal pour le réseau routier d'apprentissage (on applique alors l'étape A, sur l'ensemble du réseau routier d'apprentissage, en d'autres termes, on applique le modèle de débit maximal aux données macroscopiques de chaque brin du réseau routier d'apprentissage pour déterminer le débit maximal de véhicules sur chaque brin du réseau routier d'apprentissage), et

- de la vitesse moyenne de trafic de véhicules obtenues par le modèle de vitesse de trafic pour le réseau routier d'apprentissage (on applique alors l'étape 4, sur l'ensemble du réseau routier d'apprentissage, en d'autres termes, on applique le modèle de vitesse de trafic aux données macroscopiques de chaque brin du réseau routier d'apprentissage pour déterminer la vitesse moyenne de trafic de véhicules sur chaque brin du réseau routier d'apprentissage).

Les données macroscopiques du réseau routier correspondent aux informations liées au réseau routier, telle que l'infrastructure, la pente, la signalisation, etc. Les données de trafic sont les données mesurées ou simulées représentant le trafic sur le réseau routier. Selon un aspect de l'invention, les données macroscopiques du réseau routier peuvent être la topologie (c'est-à-dire la pente, les virages, les intersections, la signalisation, etc.), le type de brin routier (par exemple route urbaine, autoroute, etc.), le nombre de voies du brin routier, la vitesse maximale du brin routier, la signalisation du brin routier, la pente du brin routier, la longueur du brin routier, etc. Préférentiellement, les données macroscopiques comprennent au moins le type de brin routier, le nombre de voies du brin routier, la vitesse maximale du brin routier et la longueur du brin routier. De préférence, les données macroscopiques du réseau routier peuvent être fournies par un système d'information géographique (SIG). Here ™, Google Maps ™, OpenStreetMap ™ sont des exemples de système d'information géographique. Les données macroscopiques sont toujours disponibles et depuis n'importe quel lieu. Ainsi, elles peuvent servir comme entrées uniques de la première base d'apprentissage et du modèle de débit maximal, et le cas échéant du modèle de vitesse du trafic.

Les données d'urbanisme, appelées aussi données de population, sont des données associées à une zone englobant au moins une portion du réseau routier. En d'autres termes, le réseau routier est découpé en plusieurs zones, chaque zone englobe une pluralité de brins routiers du réseau routier, et à chaque zone est associée au moins une donnée d'urbanisme. Les données d'urbanisme peuvent être notamment choisies parmi la densité de population de la zone, la typologie d'activité de la zone (par exemple zone urbaine, zone commerciale, zone industrielle, zone de bureaux, zone scolaire, etc.), etc. La prise en compte de ces données permet de généraliser les modèles construits à tout réseau routier. Ces données peuvent être fournies par un webservice (service en ligne).

Les paramètres temporels peuvent être choisies parmi la saison, le mois, la semaine, le jour de la semaine, l'instant de la journée (par exemple un créneau horaire), le calendrier des jours fériés pour le réseau routier considéré, le calendrier des vacances scolaires pour le réseau routier considéré, etc. Les paramètres temporels peuvent être fournis par un webservice (service en ligne). La prise en compte de ces paramètres permet que les modèles soient représentatifs des évolutions du débit en fonction du temps, par exemple en fonction du jour de la semaine, des jours fériés, etc.

## 6. Construction du modèle de débit journalier moyen

Lors de cette étape, on construit un modèle de débit journalier moyen de véhicules qui associe à un brin routier un débit moyen journalier de véhicules en fonction de données macroscopiques du brin routier, de données d'urbanisme pour le brin routier, et de la date (qui est un paramètre temporel). En d'autres termes, le modèle de débit journalier moyen permet de déterminer le débit moyen de véhicules sur un brin d'un réseau routier pour un jour donné ; le modèle de débit journalier moyen est dépendant des données macroscopiques du brin routier, de données d'urbanisme, et de la date (le jour).

De manière avantageuse, le modèle de débit journalier moyen peut déterminer également l'écart-type du débit journalier moyen de véhicules. L'écart type représente le niveau de variation journalier du débit.

Lors de cette étape, on construit le modèle de débit moyen journalier de véhicules par une troisième méthode d'apprentissage automatique (de l'anglais « machine learning ») entraînée au moyen de la deuxième base d'apprentissage construite telle que décrite ci-dessus, comprenant les données macroscopiques du réseau routier d'apprentissage, les mesures de débit, les données d'urbanisme, les paramètres temporels, le débit maximal, et la vitesse de trafic.

Lors de cette étape, on peut construire un modèle de débit journalier moyen par apprentissage automatique, de préférence par apprentissage automatique supervisé, de manière préférée par apprentissage automatique supervisé de régression. Etant donné que l'invention proposée considère le débit mesuré en certains points et les données macroscopiques du réseau routier, ainsi que le débit maximal (qui permet de saturer le débit journalier moyen) et les données d'urbanisme, la précision du débit moyen journalier de véhicules est précis.

Selon un exemple de réalisation, le modèle du débit journalier moyen de véhicules $Deb_m$ peut s'écrire :
$Deb_m = h(Top, pente, Vmax, Pop, D_M, V_T, j)$ avec Top la topologie du brin routier, pente la pente du brin routier, $V_{max}$ la vitesse maximale autorisée sur le brin routier, Pop la densité de population, $D_M$ le débit maximal, $V_T$ la vitesse de trafic, j le jour. Top, pente et $V_{max}$ sont des exemples de données macroscopiques. Pop est une donnée d'urbanisme, j est un paramètre temporel. De manière générale, la fonction h peut dépende d'autres données macroscopiques du réseau routier, et/ou d'autres données d'urbanisme, notamment celles décrites précédemment.

La fonction h peut être déterminée à partir d'un algorithme d'apprentissage supervisé de régression, tel qu'une machine à vecteur de support (SVM de l'anglais « support vector machine »), un réseau de neurones, une forêt aléatoire ou une combinaison de ces méthodes. A titre d'exemple non limitatif, le procédé peut mettre en oeuvre un réseau de neurones avec deux couches cachées de vingt et quinze neurones respectivement, ou peut mettre en oeuvre une forêt aléatoire avec vingt estimateurs (ou arbres) de profondeur égale à 15, ou tout algorithme équivalent.

Selon un aspect, cette étape peut inclure une méthode de validation, de préférence une méthode de validation croisée, notamment une méthode de validation croisée à k-blocs (« k-fold »). Cette méthode de validation croisée permet de réduire les problèmes de « surapprentissage » et d'améliorer la précision du modèle.

7. Construction du modèle de variation journalière du débit

Lors de cette étape, on construit un modèle de variation journalière de débit de véhicules qui associe à un brin routier une variation journalière du débit de véhicules en fonction de données macroscopiques du brin routier, de données d'urbanisme, et de l'instant dans une journée (qui est un paramètre temporel). En d'autres termes, le modèle de variation journalière de débit permet de déterminer une variation de débit de véhicules sur un brin d'un réseau routier en fonction de l'instant de la journée considéré (par exemple en fonction d'un créneau horaire) ; la variation journalière du débit est dépendante des données macroscopiques du brin routier, de données d'urbanisme, et de l'instant de la journée (par exemple le créneau horaire).

Lors de cette étape, on construit le modèle variation journalière de débit de véhicules par une quatrième méthode d'apprentissage automatique (de l'anglais « machine learning ») entraînée au moyen de la deuxième base d'apprentissage construite telle que décrite ci-dessus, comprenant les données macroscopiques du réseau routier d'apprentissage, les mesures de débit, les données d'urbanisme, les paramètres temporels, le débit maximal, et la vitesse de trafic.

Selon un mode de réalisation de l'invention, on peut construire le modèle de variation journalière de débit au moyen :

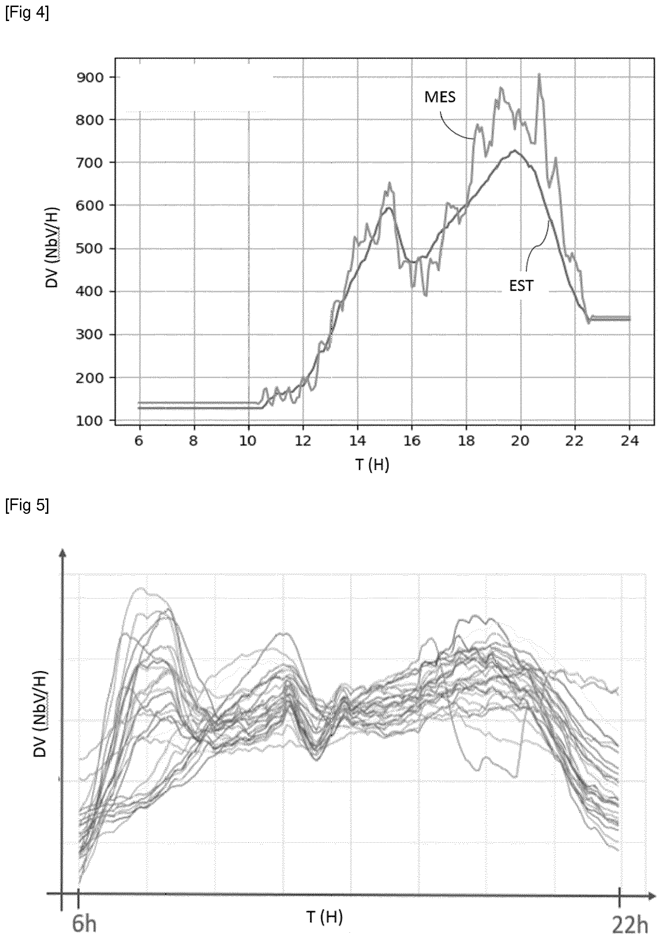

- d'une collecte des profils de débit de véhicules : il s'agit d'extraire les variations journalières de débit mesuré aux points de mesure pour chaque jour. De manière avantageuse, les profils peuvent être unitaires et normalisés par rapport au débit. Avantageusement, les profils peuvent avoir un pas d'échantillonnage assez faible de l'ordre de quelques minutes, de manière à bien mesurer l'évolution journalière du débit de véhicules.
- d'une étape de regroupement (« clustering » en anglais) des profils journaliers par une méthode d'apprentissage non supervisée : cette étape a pour objectif de diviser les profils journaliers en un certain nombre k de profils journaliers typiques et distincts (formant ainsi k classes appelés aussi clusters). Par exemple, on peut mettre en oeuvre une méthode du K-moyen pour séries temporelles (de l'anglais « Time Series Kmeans »), ou toute méthode analogue. Le nombre k de classes de profils journaliers peut être compris entre 5 et 60, et peut valoir par exemple 30. La figure 5 illustre, pour un brin routier, 30 clusters de profils journaliers de débit DV en nombre de véhicules par h (NbV/H) en fonction de l'heure T en H de la journée.
- d'une étape de classification par une méthode d'apprentissage supervisée : il s'agit d'estimer une probabilité d'appartenir à chaque classe synthétisée à l'étape précédente. Selon une mise en oeuvre, on peut mettre en oeuvre une approche d'apprentissage supervisée de classification, par exemple de type une méthode des plus proches voisins KNN (de l'anglais « K-nearest neighbours), une méthode de forêt aléatoire, etc. Pour chaque brin routier et pour une journée donnée, ce modèle estime le poids de chaque classe. La sortie est donc un profil d'évolution journalier Pd unitaire qui est la somme pondérée des k classes par les probabilités estimées. On peut écrire :

$$P_d(i,j) = \sum_{l=1}^{k} p_l(i,j)f_l(i,j)$$

Avec i le brin routier, j la journée considérée, k le nombre de classes, $f_l$ sont les profils journaliers unitaires en sortie de l'étape de regroupement, $p_l$ représente la probabilité d'appartenir à une classe l.

8. Construction d'un modèle global de débit

Lors de cette étape, on construit un modèle global de débit au moyen du modèle de débit journalier moyen et du modèle de variation journalière. Le modèle global de débit associe donc à un brin routier un débit journalier de véhicules, en fonction de données macroscopiques du brin routier, de données d'urbanisme, et de paramètres temporels, en particulier date et instant de la journée. Ainsi, le modèle global de débit prend en compte la variation temporelle du débit, et prend en compte des données du brin routier, ce qui permet de rendre le modèle global de débit précis.

Conformément à une mise en oeuvre de l'invention, on peut construire le modèle global de débit par combinaison du modèle de débit journalier moyen et du modèle de variation journalière.

Selon un mode de réalisation, on peut construire le modèle global de débit $Deb_d$ au moyen de l'équation suivante :

$Deb_d(i,j) = Deb_m(i,j) + \sigma_m(i,j)P_d(i,j)$ avec i le brin routier, j le temps, $Deb_d$ le modèle de débit global de débit de véhicules, $Deb_m$ le modèle de débit journalier moyen de véhicules obtenu par le modèle de débit journalier moyen, $\sigma_m$ l'écart type du débit journalier moyen de véhicules obtenu par le modèle de débit journalier moyen, et $P_d$ le modèle de variation journalière du débit.

8'. Correction du débit journalier

Conformément à une mise en oeuvre de l'invention, le procédé peut comporter une étape facultative de correction du débit journalier. Cette étape de correction est prévue pour assurer la connectivité des brins du réseau routier. La correction peut être mise en oeuvre lors de la construction du modèle global de débit. Cette correction peut être mise en oeuvre par une optimisation sous contrainte du débit journalier, de manière à assurer qu'en un noeud du réseau routier, le flux entrant est inférieur ou égal au flux sortant. Cette optimisation permet de prendre en compte la connectivité sous forme d'un problème optimal qui assure la connectivité du réseau routier dans les contraintes.

Selon un mode de réalisation, on peut écrire une fonction objective de la manière suivante :

$$\min_{Flow} J = \sum_{i=0}^{N} (M(i) * (Flow_{est}(i) - Flow(i)))^2$$

Avec i le brin routier, Flow le vecteur d'optimisation, N est le nombre de brin routier sur le réseau routier considéré, $Flow_{est}$ est le débit global déterminé par la combinaison des deux modèles (débit journalier moyen et variation journalière du débit), M(i)=1 lorsque que le brin routier ne comprend aucun capteur fixe, sinon M(i)=$\lambda$>1, avec $\lambda$ un paramètre représentatif du degré de confiance sur l'estimation du débit pour un brin du réseau routier, par exemple on peut fixer $\lambda$=1000.

De plus, on a la contrainte suivante pour chaque noeud k du réseau routier

$$\sum_{i \in k_{in}} Flow(i) \leq \sum_{i \in k_{out}} Flow(i)$$

Avec $k_{in}$ le sous-ensemble de brins routier entrant dans le noeud k, et $k_{out}$ le sous-ensemble de brins routiers sortant du noeud k.

De plus, on peut écrire $0 \leq Flow(i)$.

9. Détermination du débit journalier de véhicules

Lors de cette étape, on détermine le débit journalier de véhicules sur ledit au moins un brin du réseau routier considéré, en appliquant le modèle global de débit de véhicules (éventuellement avec la correction) déterminé à l'étape 8 à des données macroscopiques du brin de réseau routier considéré, des données d'urbanisme du brin routier considéré, et des paramètres temporels considérés. Le réseau routier considéré peut être identique ou différent du réseau routier d'apprentissage. En d'autres termes, pour le brin du réseau routier considéré, on connaît les données macroscopiques, les données d'urbanisme, et les paramètres temporels considéré, et on applique le modèle construit à l'étape précédente à ces données et pour le l'instant considéré.

Selon un mode de réalisation, cette étape peut comprendre en outre une correction pour assurer la connectivité des brins du réseau routier. Cette correction peut être mise en oeuvre de la même manière que pour l'étape 8'.

De plus, le procédé selon l'invention (selon le premier mode de réalisation ou selon le deuxième mode de réalisation) peut comporter une étape d'affichage respectivement du débit maximal et/ou du débit journalier de véhicules. Lors de cette étape, on affiche le débit déterminé sur une carte routière (sur un graphe routier). Cet affichage peut prendre la forme d'une note ou d'un code couleur ou d'une épaisseur de représentation de la route. Cet affichage peut être réalisé à bord du véhicule : sur le tableau de bord, sur un dispositif portatif autonome, tel qu'un appareil de géolocalisation (de type GPS), un téléphone portable (de type téléphone intelligent). Il est également possible d'afficher le nombre de passages de véhicules sur un site internet, que l'utilisateur peut consulter postérieurement à sa conduite.

De plus, le débit de véhicules peut être partagé avec les pouvoirs publics (par exemple gestionnaire de la voirie) et les entreprises de travaux publics. Ainsi, les pouvoirs publics et les entreprises de travaux publics peuvent déterminer les routes ayant un débit de véhicules élevé et adapter les routes aux utilisateurs (par exemple création de nouvelles voies, modification de la signalisation, etc.).

Exemples

Les caractéristiques et avantages du procédé selon l'invention apparaîtront plus clairement à la lecture des exemples d'application ci-après.

Afin d'illustrer le potentiel de l'invention, un débit journalier a été estimé par le procédé selon le deuxième mode de réalisation de l'invention sur un certain nombre de brins routiers sur lesquels les mesures de débit sont disponibles (équipé de capteurs fixes), et qui n'ont pas été utilisées dans la base d'apprentissage. Pour cet exemple, on a mesuré, pour les années 2018 et 2019, les débits en environ 2000 points de mesures pour le réseau routier du grand Lyon qui comprend environ 35000 brins routiers.

La Figure 4 est un graphique, pour une journée donnée, du débit de véhicules DV en nombre de véhicules par heure NbV/H, en fonction de l'instant de la journée T en H. Sur cette figure, la courbe MES correspond à celle mesurée par le capteur fixe, et la courbe EST correspond au débit mesuré par le procédé selon l'invention. On observe que les deux courbes ont le même niveau de débit journalier moyen. Les deux arrivent aussi à capter une certaine congestion, caractérisée par un pic de débit vers 14h et un autre pic de débit vers 19h. L'évolution journalière est donc très similaire. Le débit prédit reste toutefois un peu plus lisse que le débit mesuré qui est échantillonné à 6 minutes. Par conséquent, le procédé selon l'invention permet de déterminer de manière précise le débit de véhicules.

La comparaison a ensuite été étendue sur toute une base de validation qui représente à peu près 25% des données mesurées (pour cet exemple, 75% des mesures sont prises dans la base d'apprentissage). Cette base est composée de deux échantillons. Un premier échantillon comprend des données de validation dans lesquelles les brins routiers ont déjà été utilisés dans l'apprentissage. Toutefois, pour ces brins, la base d'apprentissage reste très limitée sur un certain intervalle temporel.

Pour cet exemple, l'apprentissage a été effectué sur l'année 2018 et la validation a été effectuée sur l'année 2019 pour les mêmes brins. Il s'agit donc d'une extrapolation temporelle et d'une évaluation du niveau de prédictivité du modèle. L'évaluation est effectuée avec une erreur de type SMAPE (de l'anglais « Symmetric mean absolute percentage error ») qui est une certaine erreur relative symétrique. Pour le premier échantillon, la moyenne de cette erreur est de l'ordre de 11%. Un modèle de type Dummy selon l'art antérieur qui prend une variation journalière répétée moyenne sur toute l'année a une erreur SMAPE supérieure à 40%. Le niveau de précision obtenu par le procédé selon l'invention est donc supérieur au modèle de l'art antérieur.

Le deuxième échantillon de validation contient des mesures de capteurs fixes sur des brins qui n'ont pas été observés dans la base d'apprentissage. Il s'agit donc d'une certaine évaluation de l'extrapolation spatiale du modèle global de débit. L'erreur SMAPE correspondante est de l'ordre de 23%. Cette erreur reste assez faible, en particulier étant donné que la majorité des méthodes de l'état de l'art ne permettent pas de proposer des reconstructions de débit sur des brins ne disposant pas de mesures de capteur. Par conséquent, le procédé selon l'invention permet de déterminer de manière précise le débit de véhicules.

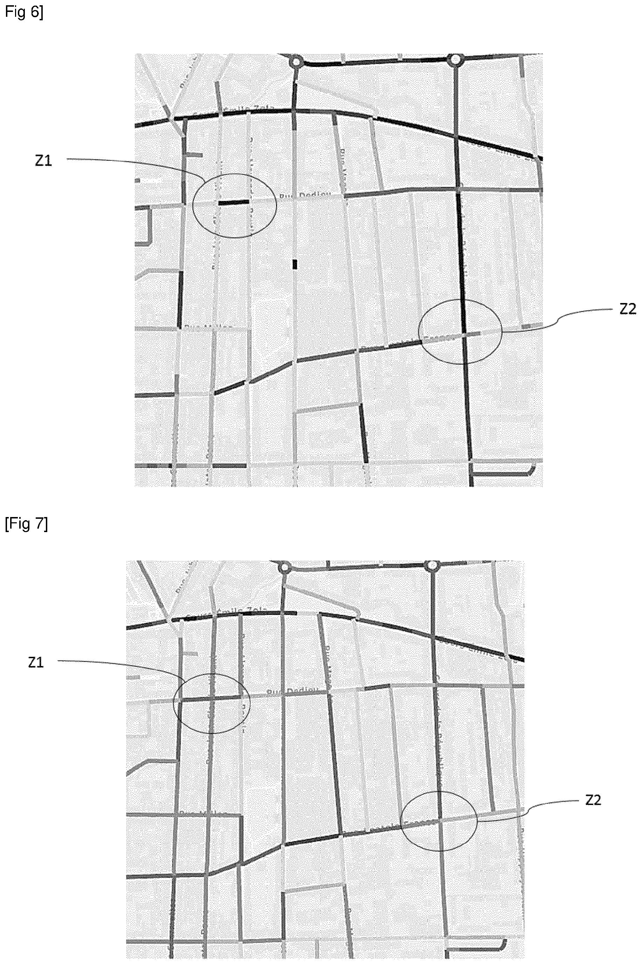

Pour le deuxième exemple, on compare, pour une portion du réseau routier de la métropole lyonnaise, le procédé selon la mise en oeuvre de la figure 2 (sans correction) et le procédé selon la mise en oeuvre de la figure 3 (avec correction). Les figures 6 et 7 illustrent une carte routière de la portion du réseau routier, sur laquelle la couleur des routes correspond au débit déterminé par le procédé selon l'invention : plus le brin routier est foncé, plus le débit de véhicules est élevé. La figure 6 correspond au débit obtenu par le procédé selon la mise en oeuvre de la figure 2, et la figure 7 correspond au débit obtenu par le procédé selon la mise en oeuvre de la figure 3. Bien que la figure 6 présente globalement une bonne connectivité, celle-ci peut être encore améliorée en particulier pour les zones Z1 et Z2. Grâce à l'optimisation de la correction, la connectivité sur la figure 7 est améliorée, en particulier pour les zones Z1 et Z2. Par conséquent, l'étape de correction permet bien d'améliorer la représentativité du débit de véhicules.

**Revendications**

1. Procédé de détermination d'un débit maximal de véhicules sur au moins un brin d'un réseau routier considéré, au moyen d'au moins un capteur fixe de mesure de trafic disposé en au moins un point de mesure agencé sur un réseau routier d'apprentissage, **caractérisé en ce qu'**on met en oeuvre les étapes suivantes :

   a. On mesure (CAP) un débit de véhicules audit au moins un point de mesure au moyen dudit au moins un capteur ;

b. On construit une première base d'apprentissage à partir desdites mesures de débit audit au moins un point de mesure et de données macroscopiques (MAC) dudit réseau routier d'apprentissage ;

c. On construit un modèle de débit maximal de véhicules (MDM) au moyen d'une première méthode d'apprentissage automatique (APP1) entraînée sur ladite première base d'apprentissage construite, ledit modèle de débit maximal de véhicules associant à au moins un brin d'un réseau routier un débit maximal de véhicules en fonction de données macroscopiques dudit au moins un brin du réseau routier ; et

d. On détermine un débit maximal de véhicules ($D_M$) sur ledit au moins un brin dudit réseau routier considéré en appliquant ledit modèle de débit maximal (MDM) à des données macroscopiques (MACb) dudit brin de réseau routier considéré.

2. Procédé selon la revendication 1, dans lequel lesdites données macroscopiques (MAC, MACb) d'un réseau routier sont choisies parmi la topologie du brin du réseau routier, le nombre de voies du brin du réseau routier, la vitesse maximale autorisée du brin du réseau routier, la pente du brin du réseau routier, la signalisation du brin du réseau routier, la longueur du brin du réseau routier, de préférence lesdites données macroscopiques dudit réseau routier étant fournies par un système d'information géographique.

3. Procédé selon l'une des revendications précédentes, dans lequel ladite première méthode d'apprentissage automatique (APP1) est un apprentissage automatique supervisé de régression, de préférence ledit apprentissage automatique est choisi parmi une machine à vecteurs de support, un réseau de neurones, une forêt aléatoire ou une combinaison de ces méthodes.

4. Procédé de détermination d'un débit journalier de véhicules sur au moins un brin d'un réseau routier considéré, au moyen d'au moins un capteur fixe de mesure de trafic disposé en au moins un point de mesure d'un réseau routier d'apprentissage, **caractérisé en ce qu'**on met en oeuvre les étapes suivantes :

a. On mesure (CAP) un débit et éventuellement une vitesse de véhicules audit au moins un point de mesure au moyen dudit au moins un capteur ;

b. On construit une première base d'apprentissage à partir desdites mesures de débit et éventuellement de vitesse audit au moins un point de mesure et de données macroscopiques dudit réseau routier d'apprentissage ;

c. On construit un modèle de débit maximal de véhicules (MDM) au moyen d'une première méthode d'apprentissage automatique (APP1) entraînée sur ladite première base d'apprentissage construite, ledit modèle de débit maximal de véhicules associant à au moins un brin d'un réseau routier un débit maximal de véhicules ($D_M$) en fonction de données macroscopiques (MAC) dudit au moins un brin du réseau routier ;

d. On construit un modèle de vitesse du trafic de véhicules (MVT) au moyen d'une deuxième méthode d'apprentissage automatique (APP2) entraînée sur ladite première base d'apprentissage construite, ledit modèle de vitesse du trafic de véhicules associant à au moins un brin d'un réseau routier une vitesse du trafic de véhicule ($V_T$) en fonction de données macroscopiques (MAC) dudit au moins un brin du réseau routier ;

e. On construit une deuxième base d'apprentissage à partir desdites mesures (CAP) de débit et éventuellement de vitesse audit au moins un point de mesure, desdites données macroscopiques dudit réseau routier d'apprentissage (MAC), de données d'urbanisme (DPO) dudit réseau routier d'apprentissage, de paramètres temporels (PTE), du débit maximal de véhicules ($D_M$) sur ledit réseau routier d'apprentissage déterminé par ledit modèle de débit maximal, et de la vitesse du trafic ($V_T$) de véhicules sur ledit réseau routier d'apprentissage déterminée par ledit modèle de vitesse du trafic de véhicules ;

f. On construit un modèle de débit journalier moyen de véhicules (MDJ) au moyen d'une troisième méthode d'apprentissage automatique (APP3) entraînée sur ladite deuxième base d'apprentissage construite, ledit modèle de débit journalier moyen de véhicules associant à au moins un brin d'un réseau routier un débit moyen journalier ($D_J$) en fonction de données macroscopiques (MAC) dudit réseau routier, de données d'urbanisme dudit réseau routier (DPO), et d'une date (PTE) ;

g. On construit un modèle de variation journalière du débit (MVD) de véhicules au moyen d'une quatrième méthode d'apprentissage automatique (APP4) entraînée sur ladite deuxième base d'apprentissage construite, ledit modèle de variation journalière du débit associant à au moins un brin d'un réseau routier une variation journalière du débit ($V_D$) de véhicules en fonction de données macroscopiques dudit réseau routier (MAC), de données d'urbanisme dudit réseau routier (DPO), et d'un instant dans une journée (PTE) ;

h. On construit un modèle global de débit de véhicules (MGD) au moyen dudit modèle de débit journalier moyen (MDJ) et dudit modèle de variation journalière (MVD) ; et

i. On détermine le débit journalier de véhicules ($D_C$) sur ledit au moins un brin dudit réseau routier considéré en appliquant ledit modèle global de débit (MGD) à des données macroscopiques (MACb) dudit brin de réseau routier considéré, à des données d'urbanisme dudit réseau routier (DPOb) considéré et à des paramètres temporels (PTEb).

**5.** Procédé selon la revendication 4, dans lequel ledit modèle global de débit de véhicules (MGD) comporte en outre une correction (COR) du débit journalier pour assurer la connectivité des brins dudit réseau routier, ladite correction étant mise en oeuvre par une optimisation sous contrainte du débit journalier.

**6.** Procédé selon l'une des revendication 4 ou 5, dans lequel ladite troisième (APP3) et/ou ladite quatrième (APP4) méthode d'apprentissage automatique est un apprentissage automatique supervisé de régression, de préférence ledit apprentissage automatique est choisi parmi une machine à vecteurs de support, un réseau de neurones, une forêt aléatoire ou une combinaison de ces méthodes.

**7.** Procédé selon l'une des revendications 4 à 6, dans lequel on construit ledit modèle de variation journalière de débit (MVD) de véhicules au moyen d'une étape de collecte des profils de débit, une étape regroupement des profils de débit par une méthode d'apprentissage non supervisée, et d'une étape de classification par une méthode d'apprentissage supervisée.

**8.** Procédé selon l'une des revendications 4 à 7, dans lequel on construit le modèle global de véhicules (MGD) au moyen de l'équation suivante : $Deb_d(i,j) = Deb_m(i,j) + \sigma_m(i,j)P_d(i,j)$ avec i le brin routier, j le temps, $Deb_d$ le débit global de débit de véhicules, $Deb_m$ le débit journalier moyen de véhicules déterminé par le modèle de débit journalier, $\sigma_m$ l'écart type du débit journalier moyen de véhicules déterminé par le modèle de débit journalier, et $P_d$ la variation journalière du débit déterminée par le modèle de variation journalière du débit.

**9.** Procédé selon l'une des revendications 4 à 8, dans lequel lesdites données d'urbanisme (DPO, DPOb) sont choisies parmi la densité de population d'une zone englobant le brin routier, et la typologie d'activités d'une zone englobant le brin routier.

**10.** Procédé selon l'une des revendications 4 à 9, dans lequel lesdits paramètres temporels (PTE, PTEb) sont choisis parmi le mois, la semaine, le jour de la semaine, les jours ouvrés ou les jours fermés.

**11.** Procédé selon l'une des revendications précédentes, dans lequel on affiche le débit maximal de véhicules ($D_M$) et/ou le débit journalier ($D_C$) de véhicules sur ledit au moins un brin du réseau routier sur une carte routière, de préférence au moyen d'un système informatique ou d'un téléphone intelligent.

[Fig 1]

[Fig 2]

[Fig 3]

[Fig 4]

[Fig 5]

Fig 6]

[Fig 7]

Europäisches
Patentamt

European
Patent Office

Office européen
des brevets

# RAPPORT DE RECHERCHE EUROPEENNE

Numéro de la demande

**EP 22 20 4301**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2004/143385 A1 (SMYTH BRIAN J [US] ET AL) 22 juillet 2004 (2004-07-22)<br>* alinéa [0094] - alinéa [0100] *<br>* alinéa [0112] - alinéa [0129] *<br>* alinéa [0140] - alinéa [0144] *<br>----- | 1-11 | INV.<br>G08G1/01<br>G06N3/00 |

**DOMAINES TECHNIQUES RECHERCHES (IPC)**

G08G

Le présent rapport a été établi pour toutes les revendications

| Lieu de la recherche | Date d'achèvement de la recherche | Examinateur |
|---|---|---|
| La Haye | 25 janvier 2023 | Iapichino, Giuliana |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P04C02)

# EP 4 181 100 A1

## ANNEXE AU RAPPORT DE RECHERCHE EUROPEENNE
## RELATIF A LA DEMANDE DE BREVET EUROPEEN NO.

EP 22 20 4301

25-01-2023

| Document brevet cité au rapport de recherche | Date de publication | Membre(s) de la famille de brevet(s) | Date de publication |
|---|---|---|---|
| US 2004143385 A1 | 22-07-2004 | US 2004143385 A1 | 22-07-2004 |
| | | US 2011010081 A1 | 13-01-2011 |

EPO FORM P0460

**EP 4 181 100 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 20211953 A
- JP 2012198839 B
- US 2014100766 A